# EUROPEAN PATENT SPECIFICATION

(11) **EP 3 149 835 B1**
(45) Date of publication and mention of the grant of the patent: **24.07.2019**
(21) Application number: 15713293.7
(22) Date of filing: 16.03.2015
(51) Int. Cl.: H02K 1/02, H02K 1/22, H02K 21/46

(54) **LAYERED PERMANENT MAGNET WITH CONDUCTIVE CAGE ROTOR CONSTRUCTION**
SCHICHTDAUERMAGNET MIT LEITFÄHIGEN KÄFIGROTORKONSTRUKTION
AIMANT PERMANENT STRATIFIÉ AYANT UNE CONSTRUCTION DE ROTOR À CAGE CONDUCTRICE

(30) Priority: 29.05.2014 US 201462004859 P
(43) Date of publication of application: 05.04.2017
(73) Proprietor: ABB Schweiz AG, 5400 Baden (CH)
(72) Inventor: TREMELLING, Darren Dale, Apex, NC 27502 (US)
(74) Representative: Gregorj S.r.l.
(86) International application number: PCT/US2015/020820
(87) International publication number: WO 2015/183379

(56) References cited:
- DE-A1- 10 060 121
- GB-A- 677 956
- JP-A- 2011 041 433
- US-A1- 2006 290 316
- US-A1- 2009 200 885
- US-A1- 2013 049 910
- US-A1- 2013 278 104

## Description

### PRIORITY CLAIM

This application claims the benefit of U.S. Provisional Patent Application Serial No. 62/004,859 filed May 29, 2014.

### TECHNICAL FIELD

The subject matter described herein relates to permanent magnet machines. More particularly, the subject matter described herein relates to layered permanent magnet with conductive cage rotor construction.

### BACKGROUND

Brushless permanent magnet (PM) machines use a rotor in which permanent magnets are embedded, arranged so that multiple magnetic poles project from the rotor radially, axially or transversely. The stator contains electromagnets which generate magnetic poles that move around the perimeter of the stator. The attraction and repulsion of the moving poles created by the current through the stator windings to the magnetic poles created by the PMs embedded within the rotor create torque.

The magnets embedded within the rotor are selected based on temperature and field requirements. The permanent magnets contained within the rotor are susceptible to damage in response to being subjected to low magnetic flux density in the magnetized direction, such as may occur during startup conditions or during fault conditions, e.g., when the magnet is exposed to a strong magnetic field of opposite polarity from the magnet's magnetic field, which can demagnetize some or all of the magnet body.

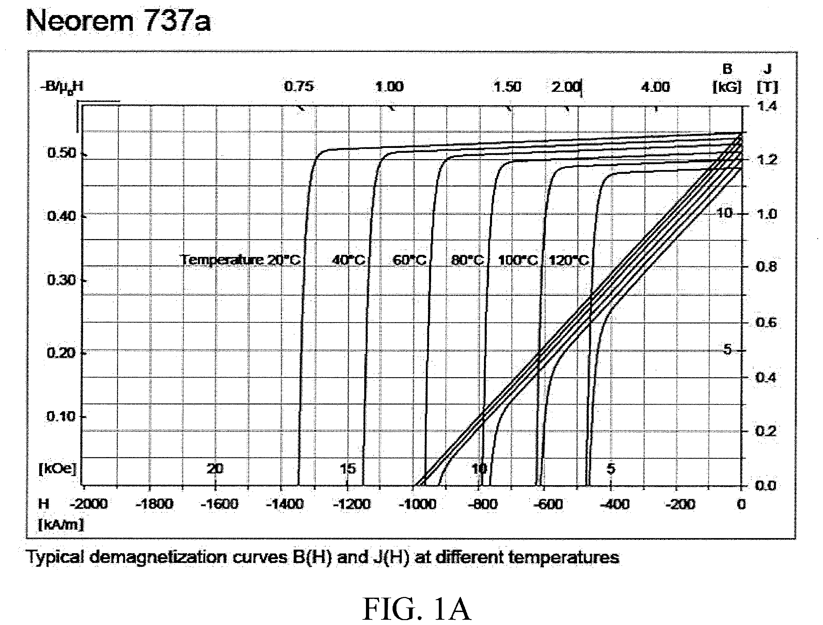

Figure 1A is a graph showing demagnetization curves for a type of magnet commonly used in PM machines. One notes that the flux density at which the magnet demagnetizes increases with increasing temperature. For instance, the knee point at 60 [C] is about 0.1 [T], while at 100 [C], the knee is at about 0.5 [T]. Obtaining flux values below the knee point demagnetize the magnet that drops below this critical value. The no load magnet operating point of the magnet in the machine geometry as well as the ampere-turns of the stator currents dictate the operating point of the magnet, even during transient events. For generators, one may first assume that the magnet is at the same temperature across the body of the magnet, due to the losses principally occurring at the edges, and that the magnet is generally cooled through the same edges. Steady state operation of the machine typically does not demagnetize the magnets, but for large motors and generators (with radial cooling ducts), the demagnetization would seem to occur principally with short circuiting type events.

Furthermore, a large change in magnetic flux, such as may happen during startup or fault conditions, induces voltage in and around the rotor. If the rotor is constructed with conductive elements, the induced voltages can cause significant currents to flow, which act to create a countervailing magnetic flux and thus protect the permanent magnet from being demagnetized. Changes in magnetic flux can induce eddy currents within the body of the magnet as well. These induced eddy currents also produce a countervailing magnetic flux and thus provide some protection against demagnetization. The countervailing magnetic flux within the body of the magnet tends to be larger than the countervailing magnetic flux at the periphery of the magnet, however, with the result that the periphery of the magnet has less protection that the rest of the magnet body, and thus the edges of the magnet tend to suffer more demagnetization than is suffered by the core of the magnet. A coupled effect is that the eddy currents create significant additional losses, and within the short circuit time frame, this energy does not propagate throughout the magnet, so the periphery of the magnet exhibits significant temperature rise. As the temperature of a magnet rises, its resistance to demagnetization is reduced.

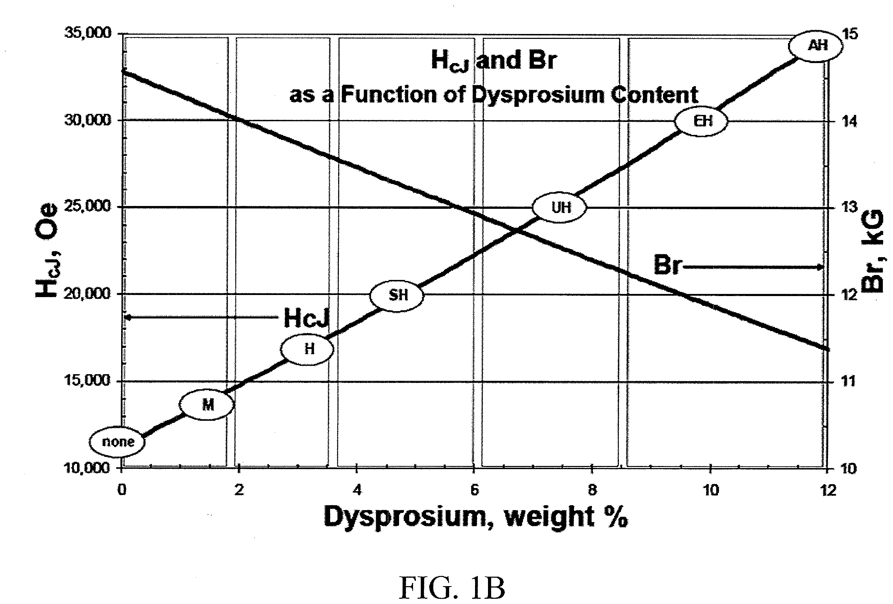

It is possible to create magnets that are capable of operating at higher temperatures and that are more resistant to demagnetization, such as by the inclusion of dysprosium (Dy), for example, but this technique has disadvantages. First, these magnets are more expensive due to the high cost of rare earth elements such as dysprosium, which are in very limited supply and thus increasingly expensive. Second, while the inclusion of dysprosium increases the magnet's coercivity, which is the resistance of a magnetic material to changes in magnetization, equivalent to the field intensity necessary to demagnetize the fully magnetized material, the inclusion of dysprosium also causes the magnet to have lower remanence, which is the magnetization left behind in a ferromagnetic material (such as iron) after an external magnetic field is removed. It is also the measure of that magnetization. This is shown in Figure 1B.

Figure 1B is a graph showing how coercivity (H_{CJ}) and remanence (B_{R}) change as the percent of dysprosium by weight is increased. It can be seen that as the percentage of dysprosium by weight is increased, coercivity increases but remanence decreases. In other words, a material that is hard to demagnetize (i.e. has high coercivity) is also hard to magnetize to the desired magnetic strength per volume of material (i.e., has low remanence.) This means that the size of the magnet must increase to compensate for the reduction of remanence, which also increases the cost of the machine. Thus, there is a need for PM rotors that include magnets that are resistant to demagnetization while minimizing the use of expensive materials.

One technique that can provide protection against demagnetizing events is the use of a rotor cage. For reasons described below, however, rotor cages are not used on PM machines. Both PM machines and synchronous machines are types of "wound field" machines. Wound field machines use coils rather than permanent magnets on the stator. Induction motors and synchronous motors use loops of wire embedded within the rotor instead of permanent magnets. The stator windings change phase over time to create a set of poles that rotate around the circumference of the stator. As one of the rotating poles passes over a loop of wire embedded within the rotor, the changing magnetic field induces a current within the wire, which generates an opposing magnetic field normal to the plane of the wire loop. This opposing magnetic field pulls the rotor along behind the pole moving around the stator. This type of machine is also called a synchronous machine. Brushless motors have permanent magnets embedded within the rotor rather than loops of wire. The poles of the rotor are dragged along with opposing poles as the opposing poles rotate around the stator. This type of machine is also referred to as a PM machine.

In synchronous machines, the rotor typically includes a cage, which is a set of conductive loops that surround each pole of the rotor, to reduce transient reactances of the machine and thus provide some protection against damage during a fault condition. When a fault on an electrical network occurs, increased current flows through the parts of the electrical network supplying the fault. Both the impedance of the fault and the network feeding the fault limit the fault current amplitude. A circuit breaker opens (clears) the faulted circuit in which the fault is present. The circuit breaker opens when a significant current is flowing through the breaker, which is present to protect the circuit in which the fault is present. This level of current is again due to the overall impedance of the network, from the generator(s) through the fault. In general, there is significant impedance at 60 [Hz] such that insufficient current flows through the circuit to open (clear) the circuit breaker. The presence of the cage on the generator reduces the transient impedance of the generator, such that sufficient current would be present during a fault so that a circuit breaker may open (in a few electrical cycles) and clear the faulted portion of the electrical network without undue damage to the network, and hopefully limiting the energy dissipated in the fault so that a fire does not occur. The loops are also used to shield the machine from damage during fault conditions. These cages work by acting to limit the change in flux linkage in the meshed spaces between the individual bars.

In wound field permanent magnet (PM) machines, there are magnets mounted on the rotor. Conventional PM machines do not include a cage on the rotor, however, despite the fact that synchronous machines being used in the same or similar applications typically do have rotor cages.

The use of a cage on the rotor of a PM machine would offer similar characteristics of acting to keep the flux linked by the conductive bars constant and would thus provide some degree of protection to the magnet against demagnetization, but this benefit is generally not recognized in the industry. On the contrary, conductive cages in PM machines are historically avoided, because the presence of the cage reduces the subtransient reactance(s) of the machine. This reduction in subtransient reactance increases the current ripple and losses in many PM machines, as well as increases losses in the converter.

Accordingly, in light of these disadvantages associated with conventional PM machines, there exists a need for rotor designs that provide enhanced protection against demagnetizing events. More particularly, there exists a need for layered permanent magnet with conductive cage rotor construction.

Documents US 2009/0200885, US 2013/0049910, US 2013/0278104, JP 2011/041433, US 2006/0290316, DE 100 60 121 and GB 677 956 disclose rotors and/or magnets according to the known art and which do not provide enhanced protection against demagnetizing events.

### SUMMARY

In permanent magnet machines, there is requirement to ensure that the magnets shall remain operational during normal and abnormal operations. As magnets are demagnetized due to heat and low magnetic flux levels, care is taken to keep the magnets cool and with appropriate geometry so that under high reverse field conditions, the flux level in the magnet does not fall below a knee in the magnet hysteresis curve. For certain permanent magnet electrical machines, the greatest challenge for the magnet operation is during transient events, such as a short circuit in the electrical windings on the stator. In these transients, the fields that can demagnetize the magnet are of a very short duration. With a conductive rotor cage, the duration and amplitude of the event is mitigated. However, due to skin effects (due to fields created by currents in the conductive cages, induced by change in flux linkage in the cage) there are always some reduced fields present in the magnets during this transient event. Thus, the outer portion of a magnet is exposed to lower values of magnetic flux in the magnetized direction than the interior of the magnet. Thus, the combination of a conductive cage and the use of magnets with higher intrinsic coercivity in the periphery of the magnet body than in the core of the magnet body provides a protection against demagnetization events that is much greater than the use of either of these techniques alone.

According to one aspect, the subject matter described herein includes a rotor for an electrical machine. The rotor includes a rotor body having a central axis and including multiple permanent magnets positioned to create a plurality of rotor magnetic poles distributed around a peripheral surface of the rotor, and a cage that provides conductive loops around each of the rotor magnetic poles.

Each permanent magnet has a magnet body having a center portion and a peripheral portion, the center portion comprising a material having higher remanence than the material comprising the peripheral portion and the peripheral portion comprising a material having a higher coercivity than the material comprising the center portion.

According to another aspect, the subject matter described herein includes an electrical machine with a hybrid cage. The machine includes a stator having a central axis and multiple windings for generating a rotating field of stator magnetic poles and a rotor having a central axis which coincides with the central axis of the stator. The rotor includes multiple permanent magnets positioned to create multiple rotor magnetic poles distributed around a peripheral surface of the rotor and a hybrid cage comprising conductive loops around each of the rotor magnetic poles, where each permanent magnet comprises a magnet body having a center portion and a peripheral portion, where the center portion comprises a material having higher remanence than the material comprising the peripheral portion and where the peripheral portion comprises a material having a higher coercivity than the material comprising the center portion.

According to yet another aspect, the subject matter described herein includes a method for operating a permanent magnet electrical machine with a hybrid cage. The method includes providing, at an electrical machine that includes a rotor having multiple permanent magnets positioned to create multiple rotor magnetic poles distributed around a peripheral surface of the rotor, a cage comprising conductive loops around each of the rotor magnetic poles, where each permanent magnet comprises a magnet body having a center portion and a peripheral portion, where the center portion comprises a material having higher remanence than the material comprising the peripheral portion and where the peripheral portion comprises a material having a higher coercivity than the material comprising the center portion.

The subject matter described herein can be implemented in software in combination with hardware and/or firmware. For example, the subject matter described herein can be implemented in software executed by a processor. In one exemplary implementation, the subject matter described herein can be implemented using a non-transitory computer readable medium having stored thereon computer executable instructions that when executed by the processor of a computer control the computer to perform steps. Exemplary computer readable media suitable for implementing the subject matter described herein include non-transitory computer-readable media, such as disk memory devices, chip memory devices, programmable logic devices, and application specific integrated circuits. In addition, a computer readable medium that implements the subject matter described herein may be located on a single device or computing platform or may be distributed across multiple devices or computing platforms.

### BRIEF DESCRIPTION OF THE DRAWINGS

Preferred embodiments of the subject matter described herein will now be explained with reference to the accompanying drawings, wherein like reference numerals represent like parts, of which:
Figure 1A is a graph showing demagnetization curves for a type of magnet commonly used in PM machines;
Figure 1B is a graph showing how coercivity (H_{CJ}) and remanence (B_{R}) change as the percent of dysprosium by weight is increased;
Figures 2A and 2B respectively illustrate a plan view and an orthogonal view of an exemplary permanent magnet having higher intrinsic coercivity in the periphery of the magnet body than in the core of the magnet body according to an embodiment of the subject matter described herein;
Figure 3 illustrates an orthogonal view of an exemplary permanent magnet having higher intrinsic coercivity in the periphery of the magnet body than in the core of the magnet body according to another embodiment of the subject matter described herein;
Figures 4, 5, and 6 illustrate sections of exemplary layered permanent magnet with conductive cage rotor construction according to embodiments of the subject matter described herein;
Figures 7 and 8 illustrate the health of a pair of permanent magnets in a rotor with and without a cage, respectively, according to an embodiment of the subject matter described herein;
Figure 9 is a graph illustrating the approximate magnetic flux condition at which the magnet becomes demagnetized and resultant demagnetized edge widths for rotors with and without a cage;
Figures 10A, 10B, 10C, 11A, 11B, 12A, and 12B illustrate cages according to other embodiments of the subject matter described herein;
Figures 13A and 13B illustrate sections of exemplary rotors for a permanent magnet electrical machine with layered permanent magnets and a hybrid cage according to embodiments of the subject matter described herein;
Figures 14A and 14B illustrate sections of exemplary rotors for a permanent magnet electrical machine with layered permanent magnets and a hybrid cage according to other embodiments of the subject matter described herein;
Figures 15A, 15B, and 15C illustrate circuits of exemplary rotors for a permanent magnet electrical machine with layered permanent magnets and a hybrid cage according to embodiments of the subject matter described herein.

### DETAILED DESCRIPTION

In accordance with the subject matter disclosed herein, systems, methods, and computer readable media for layered permanent magnet (PM) with conductive cage rotor construction are provided.

The subject matter described herein combines two features not previously seen together in a PM machine - namely, a PM rotor that includes both a cage and permanent magnets having higher intrinsic coercivity in the periphery of the magnet body than in the core of the magnet body.

Reference will now be made in detail to exemplary embodiments of the present invention, examples of which are illustrated in the accompanying drawings. Wherever possible, the same reference numbers will be used throughout the drawings to refer to the same or like parts.

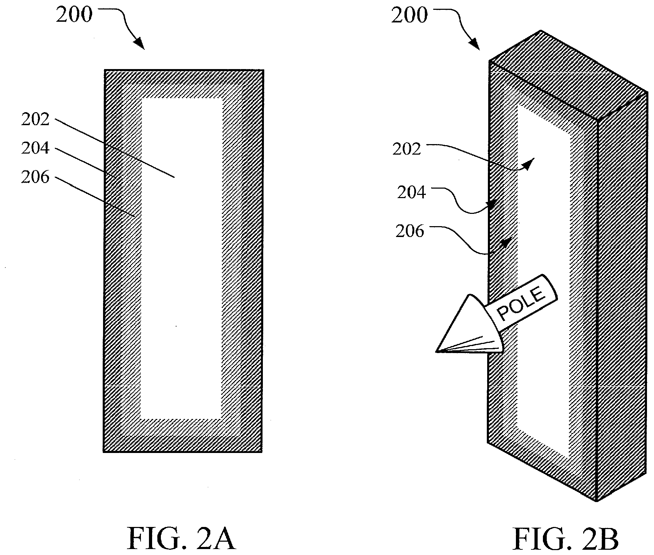

Figures 2A and 2B respectively illustrate a plan view and an orthogonal view of an exemplary permanent magnet having higher intrinsic coercivity in the periphery of the magnet body than in the core of the magnet body according to an embodiment of the subject matter described herein. In each figure, permanent magnet body **200** includes a central portion **202** and a peripheral portion **204.** Central portion **202** is composed of a material that has high remanence relative to peripheral portion **204,** and peripheral portion **204** is composed of a material that has high coercivity relative to central portion **202.** In one embodiment, peripheral portion **204** may contain more dysprosium per volume than is contained in central portion **202,** which gives peripheral portion **204** higher coercivity than central portion **202.** Since the addition of dysprosium reduces remanence, the lower percentage of dysprosium per volume contained in central portion **202** relative to peripheral portion **204** will give central portion **202** higher remanence relative to peripheral portion **204.** In other embodiments, the higher remanence exhibited by central portion **202** may be due to an additional substance that was added for that purpose and that exists in higher percentage by volume within central portion **202** than within peripheral portion **204.** Example elements that increase coercivity include, but are not limited to, aluminum, titanium, vanadium, chromium, copper, gallium, zirconium, niobium, molybdenum, tin, terbium, and tungsten.

In one embodiment, there may be a transition layer **206** between central portion **202** and peripheral portion **204,** within which the coercivity and remanence values are somewhere in between the value found in central portion **202** and the value found in peripheral portion **204.** This transition layer may exist or may be non-existent. Where transition layer **206** does not exist, there may be a sharp boundary between central portion **202** and peripheral portion **204.** Where transition layer **206** does exist, the transition of values between central portion **202** and peripheral portion **204** may transition smoothly, in a step-wise manner, or according to any other transition profile.

Although the embodiment of permanent magnet body **200** illustrated in Figure 2 suggests that peripheral portion **206** exists on only 4 of the 6 surfaces, the subject matter disclosed herein is not so limited. Peripheral portion **206** may exist on any or all surfaces of permanent magnet body **200.** Furthermore, permanent magnet body **200** is not limited to cubical or rectangular shapes, but may be any appropriate shape.

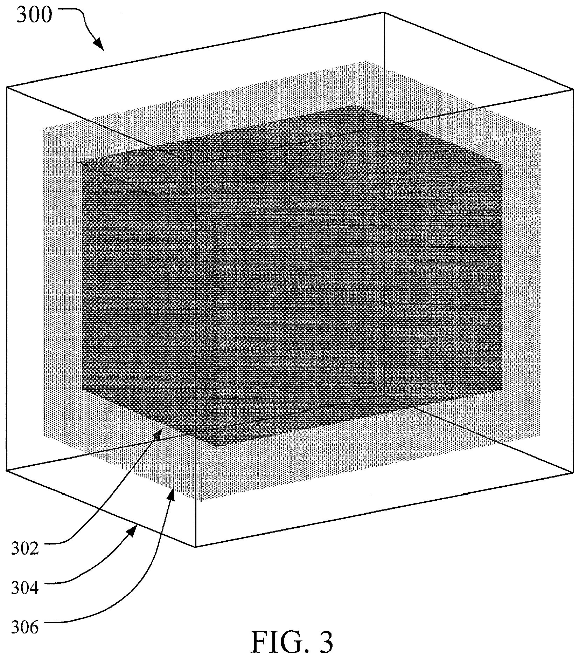

Figure 3 illustrates an orthogonal view of an exemplary permanent magnet having higher intrinsic coercivity in the periphery of the magnet body than in the core of the magnet body according to another embodiment of the subject matter described herein. In the embodiment illustrated in Figure 3, permanent magnet body **300** includes a central portion **302** and a peripheral portion **304.** Central portion **302** is composed of a material that has high remanence relative to peripheral portion **304,** and peripheral portion **304** is composed of a material that has high coercivity relative to central portion **302.** It should be noted that in Figure 3, central portion **302** is heavily shaded while peripheral portion **304** is not - the opposite of the shading convention used in Figure 2 - because this shading convention makes it easier to see central portion **302,** which would otherwise be obscured by peripheral portion **304,** which completely surrounds and encloses central portion **302.** In one embodiment, magnet body **300** may include a transition layer **306** having the same characteristics as transition layer **206** described above, the description of which will not be repeated here.

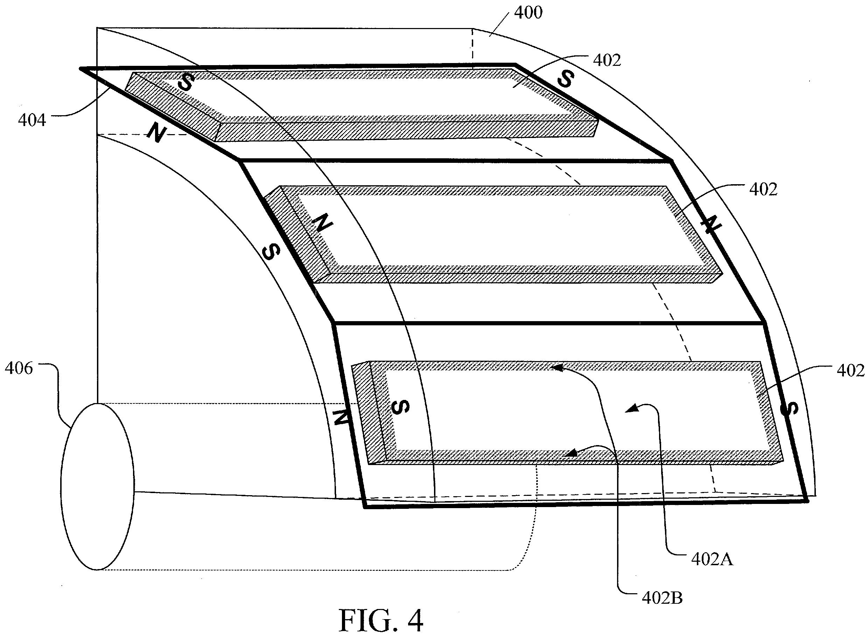

Figures 4, 5, and 6 illustrate sections of exemplary layered permanent magnet with conductive cage rotor construction according to embodiments of the subject matter described herein.

Figure 4 illustrates a section of a rotor having layered permanent magnets with a conductive cage according to an embodiment of the subject matter described herein. In the embodiment illustrated in Figure 4, rotor **400** contains magnets **402** that form magnetic poles. The poles are surrounded by a conductive cage **404** that includes a conductive loop that surrounds each magnetic pole. Rotor **400** surrounds a shaft **406.** Rotor **400** rotates within a stator, which is omitted from this illustration for clarity. In the embodiment illustrated in Figure 4, each permanent magnet **402** includes a central portion **402A** and a peripheral portion **402B,** indicated on each magnet body as an unshaded portion and a shaded portion, respectively. In the embodiment illustrated in Figure 4, the poles of rotor **400** are vectors that are normal to the largest surface of each magnet **402,** i.e., extending radially from shaft **406.** Peripheral portions **402B** are located on the surfaces of the magnet that are normal to the magnetic vector of the pole, i.e., where demagnetization is most likely to occur.

The presence of conductive cage **404** provides protection against demagnetizing events in the following manner: when a large change in magnetic flux occurs, this induces currents to flow within each loop of cage **404.** The current so induced gives rise to its own opposing magnetic field. Because cage **404** is present, the magnetic field strength present within magnet **402** is reduced by the opposing magnetic field. As a result, the amount of high-coercivity material needed within peripheral portion **402B** is less than would be needed without cage **404.** Alternatively, a less expensive material with slightly lower coercivity may be used instead of expensive, high coercivity materials such as dysprosium and still provide sufficient protection against demagnetization of magnets **402.**

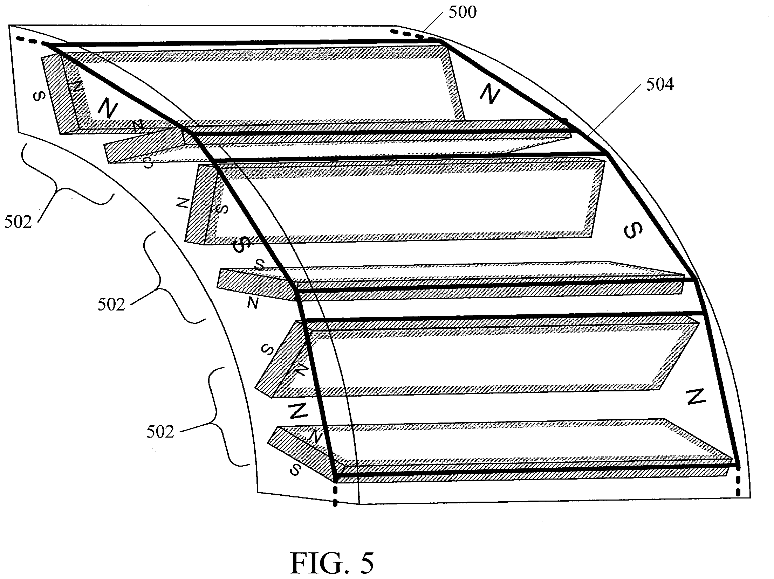

Figure 5 illustrates an alternative rotor configuration according to another embodiment of the subject matter described herein. In the embodiment illustrated in Figure 5, rotor **500** includes permanent magnets arranged in pairs **502** to produce a pattern of alternating north (N) and south (S) magnetic poles around the outer diameter of the rotor. Each pair of magnets is arranged in a V shape such that the magnetic field produced by each pair has a vector that is normal to the outer surface of rotor **500.** In this embodiment, each loop of conductive cage **504** surrounds a magnetic pole produced by a magnet pair **502.** Like rotor **400** in Figure 4, the permanent magnets in rotor **500** include a central portion having a higher remanence than the peripheral portion and a peripheral portion having a higher coercivity than the central portion. As in Figure 4, the peripheral portion of each magnet is shaded and the central portion of each magnet is unshaded.

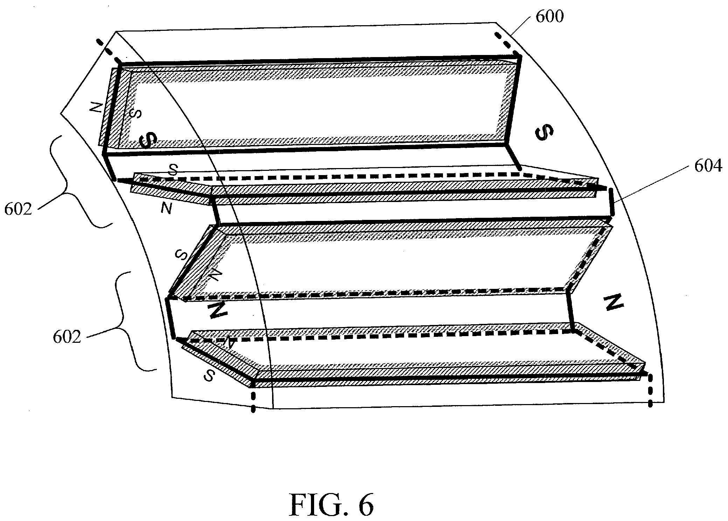

Figure 6 illustrates yet another exemplary rotor configuration according to another embodiment of the subject matter described herein. In the embodiment illustrated in Figure 6, rotor **600** includes permanent magnets arranged in pairs **602** to produce a pattern of alternating north and south magnetic poles around the outer diameter of the rotor. Like rotor **500** in Figure 5, each magnet in rotor **600** includes a central portion having a higher remanence than the peripheral portion and a peripheral portion having a higher coercivity than the central portion, and each pair of magnets **602** is arranged in a V shape such that the magnetic field produced by each pair has a vector that is normal to the outer surface of rotor **600.** In this embodiment, however, conductive cage **602** includes a loop to surround each magnet in the magnet pair **602.**

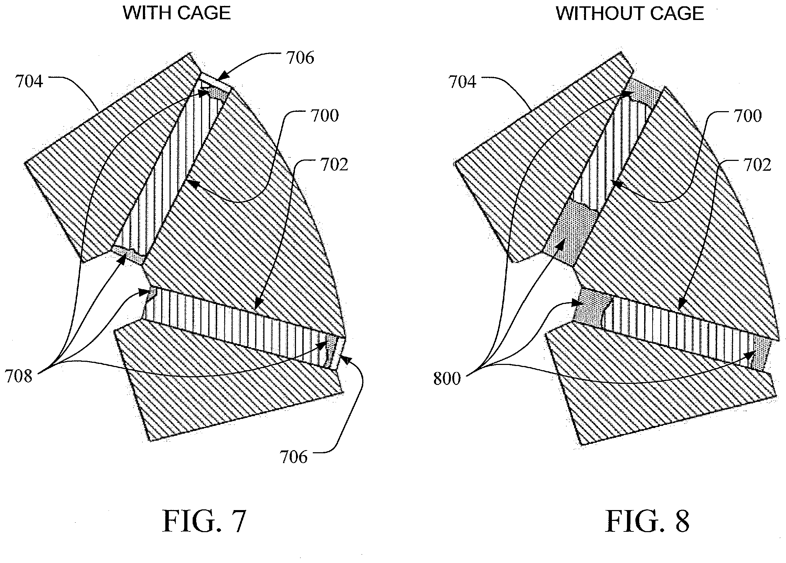

**Benefits of a cage.** To verify the effectiveness of a cage at mitigating demagnetization events, the demagnetizations were investigated via finite element modeling simulations using a finite element analysis program, which simulated nominal load functionality followed by three phase short circuit. Magnet health is readily available as an output of the simulation, and the approximate edge width was a geometrical conversion of the simulated geometry. Various machine geometries were evaluated, with variation in magnet remanence, as well as axial length investigated. Demagnetization knee points were varied from -0.3 [T] to 0.3 [T]. The use of a conductive cage or the nominal geometry was also investigated. Example simulation outputs may be seen in Figures 7 and 8, showing the results for a rotor with and without a conductive cage. It should be noted that in Figures 7 through 15C, the layered construction of the permanent magnets is not shown for simplicity.

Figures 7 and 8 show the health of a pair of permanent magnets **700** and **702** in a rotor **704** with a cage **706** (Figure 7) and without a cage (Figure 8), and particularly showing the demagnetization that occurred at 0.1 Telsas. The shaded portions within each magnet represent portions of the magnet that were demagnetized as a result of the demagnetizing event. As can be seen in Figures 7 and 8, the demagnetized region **708** of magnets **700** and **702** in rotor **704** with conductive cage **706,** shown in Figure 7, is much smaller than the demagnetized region **800** of magnets **700** and **702** in rotor **704** without the conductive cage, shown in Figure 8. The demagnetized portion of the magnet is near the edges that are normal to the typical flux path in the magnet. This is due to the protective presence of the eddy currents in the magnet that occurs during transients. In other words, the presence of a rotor cage lowers the location of the knee in Figure 1. This means that it takes a much stronger opposing field to demagnetize a magnet protected by a cage than it does to demagnetize a magnet not protected by a cage.

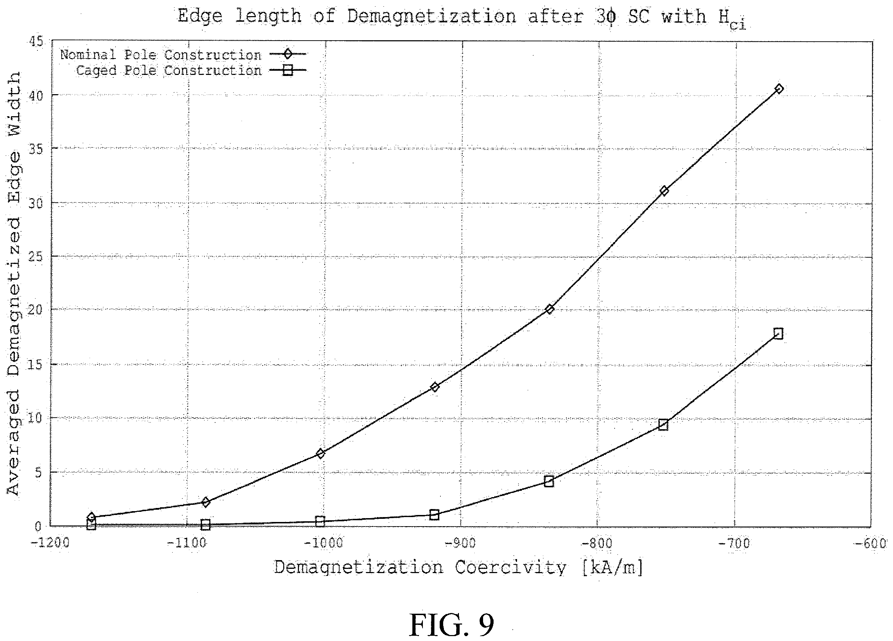

Figure 9 is a graph illustrating the demagnetization coercivity and resultant demagnetized edge widths for rotors with and without a cage. There are stark differences between the caged and uncaged geometries. Under the same conditions, magnets on the uncaged rotor suffer demagnetization to a greater depth than do their caged counterparts. For example, at -900 kA/m, caged magnets suffer demagnetization to a depth of about 2mm, while uncaged magnets suffer demagnetization to a depth of 15mm, or about 7 times more damage than the caged magnets.

Referring back to Figure 2B, which shows the appearance of the different layers in the magnet in different views, the magnetized direction of the magnet is normal to the largest face of the magnet and shown as a vector labeled "POLE". In one embodiment, the thickness of peripheral layer **204** is 5 mm. In this example, assuming that a slight amount of demagnetization about the edges of the magnet will occur (but may be nulled by leakages), the caged magnet may have an outer layer of magnet with a knee point of -0.1 [T], the next layer of about 0.15 [T], and the innermost portion being of about 0.25 [T]. Alternatively, without a cage, the uncaged magnet might need much higher demagnetization resistance, e.g., -0.3 [T], -0.15 [T], and -0.05 [T] or similar. Magnets with significantly greater knee points may be used when the rotor has a cage.

**Benefits of layered magnets.** As shown above in Figure 1B, adding rare earth elements such as dysprosium produces a permanent magnet that is less susceptible to demagnetizing events but also produces a magnet that has less remanence. This tradeoff results in a lower functioning machine for higher temperatures of reverse transient fields, due to reduced remanence, and thus lower magnetic loading. Thus, the more demagnetization fields a magnet may encounter, the larger the electrical machine must be. Layered magnets, such as those shown in Figures 2A, 2B, and 3, have areas of higher coercivity where there is likely to be demagnetization damage as a result of demagnetization events such as those described above, i.e., in peripheral portion **204.** Where demagnetization damage is less likely, such as in the center of the magnet body, the layered magnets according to embodiments of the subject matter disclosed herein include an area of higher remanence, i.e., in central portion **202.** In this manner, a layered magnet may be made less expensively than one having dysprosium at equal concentration throughout. Having the high remanence central portion **202** allows the magnet to be smaller than one having dysprosium at equal concentration throughout. The addition of a conductive cage allows the peripheral portion **204** to be thinner, i.e., the total amount of dysprosium needed per magnet can be reduced.

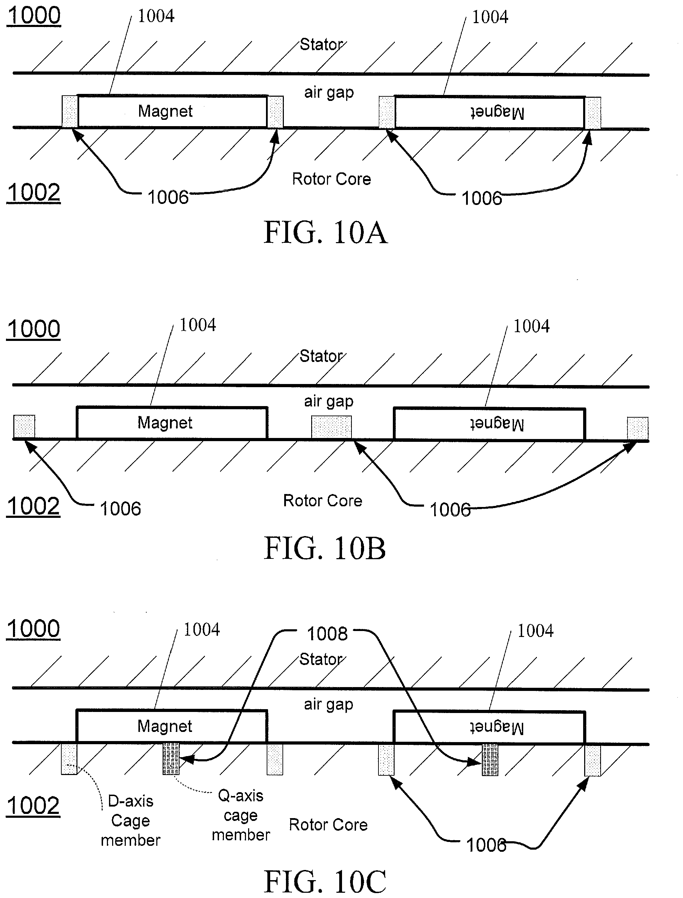

**Cages.** Figures 10A, 10B, and 10C illustrate cages according to other embodiments of the subject matter described herein. Figure 10A illustrates a cross section of a surface magnet type motor, having a stator **1000** and a rotor **1002** separated by an air gap. Magnets **1004** are positioned on the outer surface of rotor **1002.** The text 'magnet' is oriented such that the magnet would be oriented in the direction of reading of the text. Each magnet is surrounded by a cage **1004** having conductors seen in cross section as shaded boxes. In the embodiment illustrated in Figure 10A, the conductors that make up the cage are located in close proximity to the magnets. The embodiment illustrated in Figure 10B is similar to the embodiment illustrated in Figure 10A, except that a single conductor is shared between each pair of magnets **1004.** This construction uses fewest parts, which may protect the magnets to the greatest degree from air gap field variations for this rotor construction. The embodiment illustrated in Figure 10C is also similar to the embodiment illustrated in Figure 10A, except that cage **1006** is embedded within the body of rotor **1002,** e.g., within the laminations that make up the rotor core. This configuration is well suited for higher speed machines, since the conductors are securely held into place by the rotor laminations. Figure 10C also illustrates the presence of a second cage **1008** located along the q-axis.

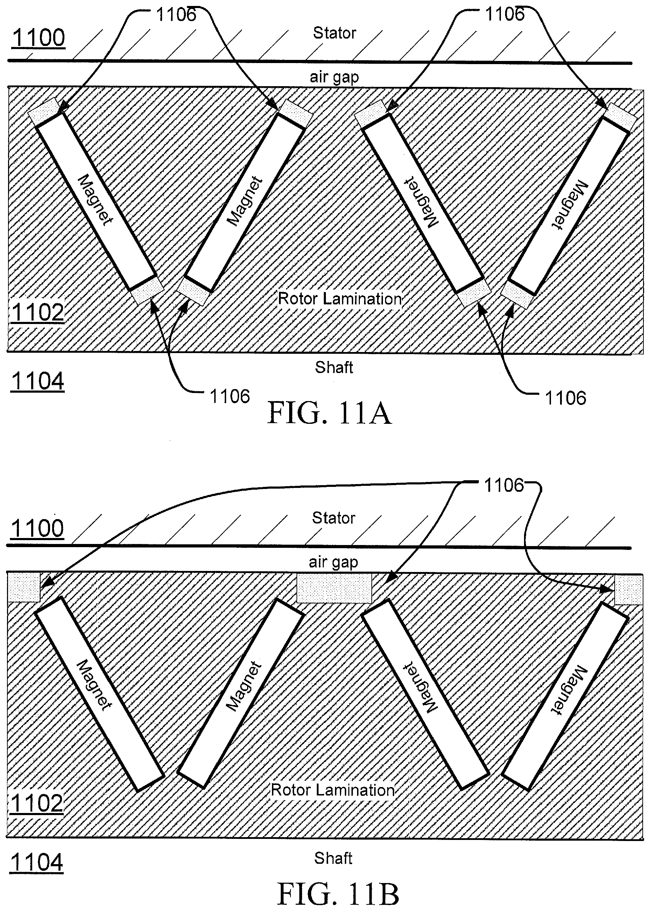

Figures 11A and 11B illustrate cages according to yet other embodiments of the subject matter described herein. Figures 11A and 11B illustrate cross sections of motor having a stator **1100** and a rotor **1102** attached to a shaft **1104,** where the laminations of rotor **1100** contain 'V' mounted or embedded magnets. In the embodiment illustrated in Figure 11A, conductors of cage **1106** are in close proximity to the magnets. For example, the bars may be connected in circuits that encompass each magnet. In the embodiment illustrated in Figure 11B, conductors of cage **1106** are located in close proximity to the magnets, but only on the side of the magnets that are close to the air gap. Benefits of this embodiment include lower cost due to the fact that this construction uses fewest parts, and the additional benefit that it may give to the magnets a greater degree of protection from air gap field variations.

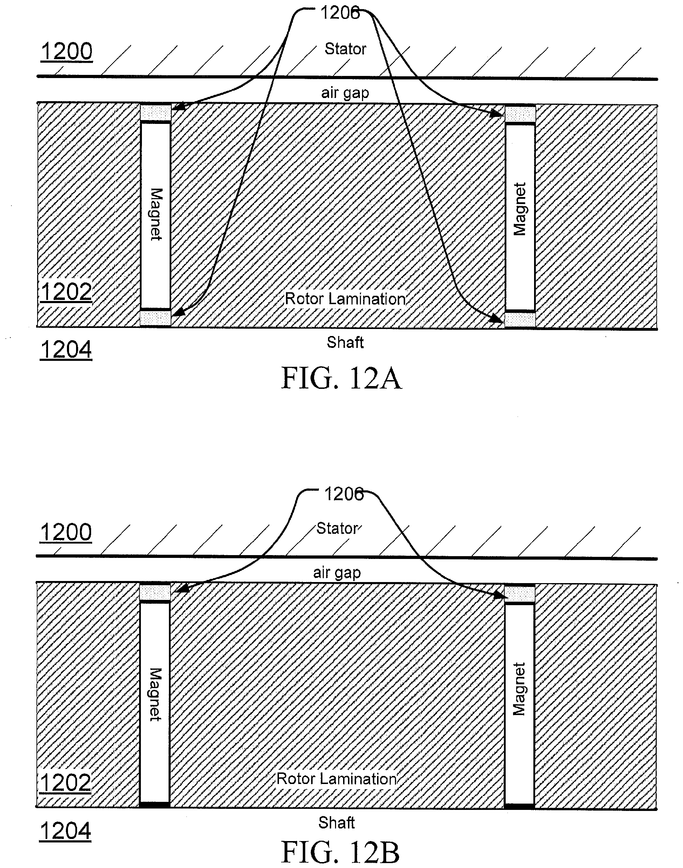

Figures 12A and 12B illustrate cages according to yet other embodiments of the subject matter described herein. Figures 12A and 12B illustrate cross sections of motor having a stator **1200** and a rotor **1202** attached to a shaft **1204,** where the laminations of rotor **1200** contain 'spoke' mounted or embedded magnets. In the embodiment illustrated in Figure 12A, conductors of cage **1206** are in close proximity to the magnets. For example, the bars may be connected in circuits that encompass each magnet. In the embodiment illustrated in Figure 12B, conductors of cage **1206** are located in close proximity to the magnets, but only on the side of the magnets that are close to the air gap.

The conductors or bars of the cage may be of any shape, cross-section, etc., as appropriate. For example, the short circuiting bars may be of many different shapes, due to cross section constraints of minimizing leakage flux during normal operation and under active cage events, as well as structural and manufacturing considerations.

The figures above illustrate the application of a cage in a rotor having magnetic poles that project radially outward from the surface of the rotor, but the subject matter described herein is not limited to radial flux machines. The concepts and principles disclosed herein may be applied to other types of machines, including axial flux and transverse flux permanent magnet machines. Regardless of the orientation of the rotor magnetic poles - radial, axial, transverse, etc., -- a cage may be provided that implements a controllably conductive loop around the magnetic poles.

**Hybrid cages.** In some embodiments, the conductive loops of a cage may be controllable to be a closed circuit or an open circuit. This kind of cage is referred to as a "hybrid" cage. The presence of a conductive cage (where each loop is a closed circuit) provides protection in the event of a demagnetizing event, but reduces operating efficiency of the PM machine. By making the cage non-conductive (where each loop of the cage is an open circuit), the effects of the cage - both beneficial and non-beneficial - disappear. Thus, there is a benefit to providing a hybrid cage that can be electrically inert during normal operation but can become electrically conductive during fault conditions. In this manner, the cage may provide protection when needed yet not cause a loss of efficiency when the cage is not needed.

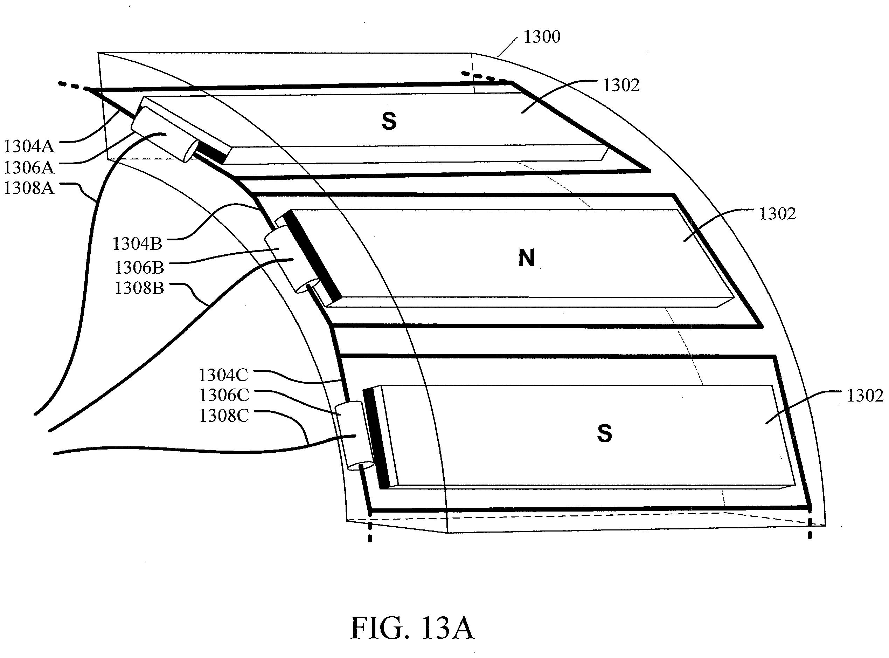

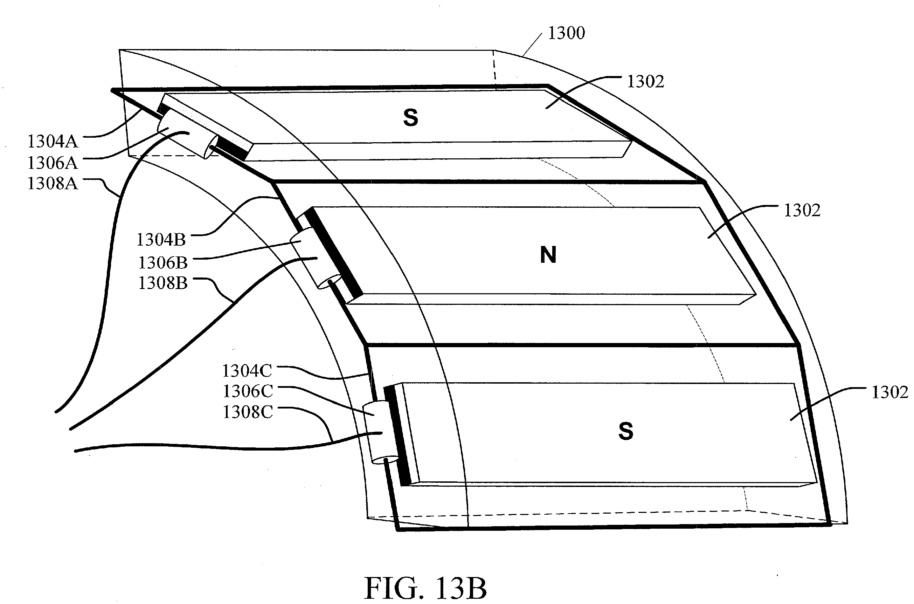

Figures 13A and 13B illustrate sections of exemplary rotors for a permanent magnet electrical machine with a hybrid cage according to embodiments of the subject matter described herein.

Figure 13A illustrates a section of a rotor **1300** having magnets **1302** that are surrounded by conductive paths **1304A, 1304B,** and **1304C,** which are herein collectively referred to as conductive paths **1304.** Each conductive path includes a switching device **1306A, 1306B, 1306C,** where are herein collectively referred to as switching devices **1306.** The combination of conductive paths **1304** and switching devices **1306** create a hybrid cage around rotor **1300.**

In one mode of operation, switching devices **1306** electrically conduct, forming a closed circuit loop around each magnet **1302.** In another mode of operation, switching devices **1306** do not electrically conduct, breaking the closed circuit loop around each magnet **1302,** i.e., causing an open circuit. In the embodiment illustrated in Figure 3A, each switching device has its own respective control input **1308A, 1308B,** and **1308C,** where are herein collectively referred to as control inputs **1308.** In one embodiment, each switching device may be controlled individually. In another embodiment, switching devices **1306** may be controlled as a group.

Thus, in the embodiment illustrated in Figure 13A, conductive paths **1304** form conductive loops around each magnet **1302,** and each loop is controllable to be an open circuit or a closed circuit. In the embodiment illustrated in Figure 13A, all loops are connected together electrically on the right side of each loop. Figure 13A illustrates an embodiment in which the conductive paths are positioned relatively close to the periphery of its respective permanent magnet.

In one embodiment, a controller may produce the control inputs **1308** according to whether having a closed loop is desired, such as during startup or a fault condition, or having an open loop is desired, such as during normal operation of the machine. Example switching devices **1306** include but are not limited to diodes, silicon-controlled rectifiers (SCRs), metal oxide semiconductor field effect transistors (MOSFETs), insulated gate bipolar transistors (IGBTs), mechanical relays, or any other type of switch. Embodiments which use diodes, for example, have the added benefit that no control inputs **1308** are needed, which simplifies design and construction. By providing a cage that implements a closed loop, the eddy current losses are forced to the cage elements, with the result that, during short circuits, the magnet does not experience the kind of significant local heating that may lead to damage. The presence of a conducting loop, in other words, helps the magnet remain healthy. Such protection is particularly beneficial for magnets that contain NdFeB, Ferrite, SmCo, or Alnico.

Figure 13B illustrates another version of the hybrid cage structure shown in Figure 13A, except that each loop shares a conductive path with the loop on either side of it. In the embodiment illustrated in Figure 13B, there is only one conductor between each pair of magnets **1302,** rather than the pair of conductors shown in Figure 13A. In the embodiment illustrated in Figure 13B, switching devices **1306** are located at one end of rotor **1300,** but other configurations are contemplated. For example, there could be switching devices at the other end, at both ends, or even along the conductive paths that run between and parallel to the magnets. In other words, switching devices **1306** may be located anywhere along the conducting loop such that they can controllably create an open circuit or a closed circuit.

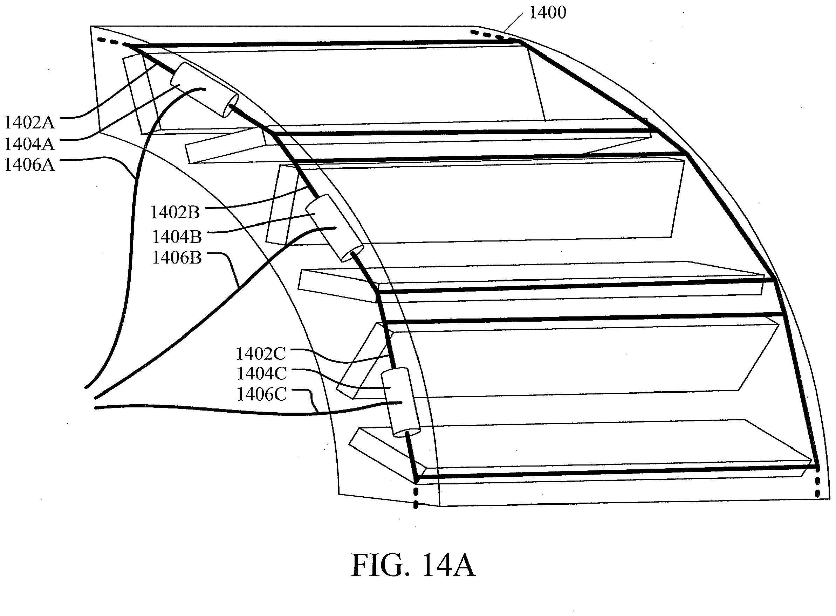

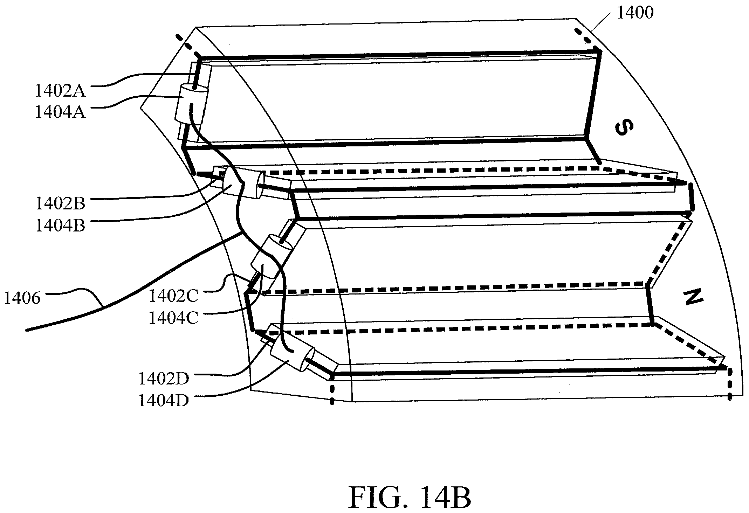

Figures 14A and 14B illustrate sections of exemplary rotors for a permanent magnet electrical machine with a hybrid cage according to other embodiments of the subject matter described herein.

Figure 14A illustrates a section of a rotor **1400** that contains conductive paths **1402** that surround and circumscribe each rotor magnetic pole. The conductive paths **1402** and switching devices **1404** comprise the hybrid cage. This illustrates the principle that the controllable conductive paths that surround the rotor magnetic poles may surround multiple magnets, or magnets a variety of configurations. This configuration is herein referred to as a "loop per pole" topology. In the embodiment illustrated in Figure 14A, each of the switching devices **1404** require a control input **1406,** but in another embodiment the hybrid cage may use switching devices, such as diodes, that do not require control inputs. The circuit topology of the cage shown in Figure 14A differs from the one shown in Figure 13A in that in Figure 13A, each loop is connected to adjacent loops on only one side, i.e., the side of the loop closest to switching devices **1306,** while in Figure 14A, each loop is connected to adjacent loops on two sides. The topology shown in Figure 14A creates closed loops between each pole, but the effect of these loops on the efficiency of the machine may be negligible, depending on the actual dimensions, etc.

Figure 14B shows another variation of a hybrid cage comprised of conductive paths **1402** and switching devices **1404** in which individual magnets have their own controllable loop, herein referred to as a "loop per magnet" topology. Figure 14B also illustrates the principle that multiple loops may be controlled by a single control signal **1406.**

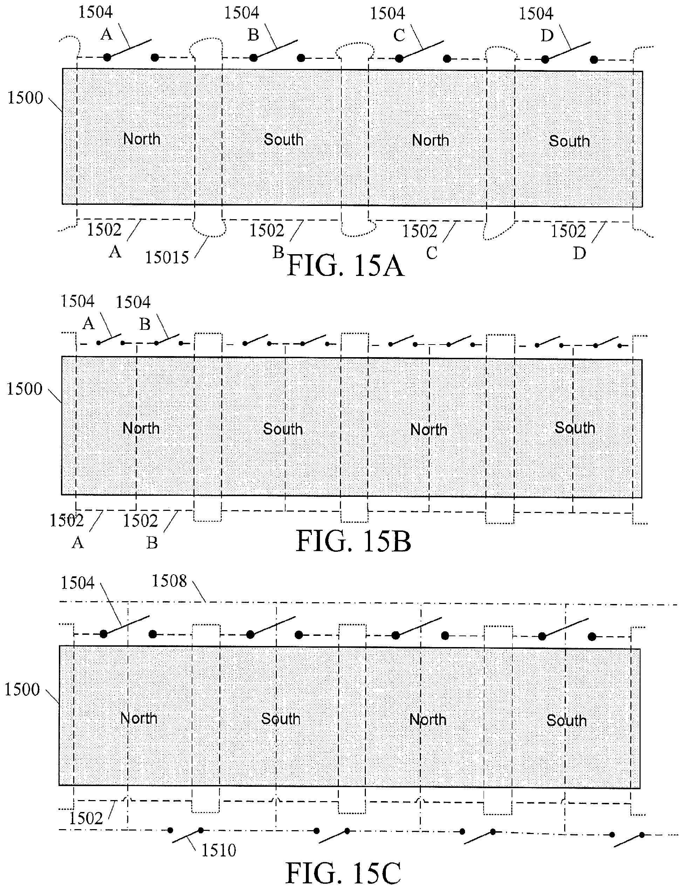

In addition to the various physical configurations of magnets, conductive paths, switches, etc. that are contemplated by the instant application, multiple electrical configurations are contemplated. Figures 15A through 15C show a few examples of the many electrical or circuit topologies that are possible according to embodiments of the subject matter described herein.

Figure 15A illustrates the circuit of a hybrid cage according to one embodiment of the subject matter described herein. For simplicity, the "unrolled" surface of rotor **1500** is shown in a two-dimensional representation. The left edge of rotor **1500** would be joined to the right edge of rotor **1500** to form the cylindrical surface of a three-dimensional rotor. The dashed and dotted lines indicate conducting loops **1502A, 1502B, 1502C,** and **1502D,** which are herein collectively referred to as conducting loops **1502.** In one embodiment, the dashed lines indicate the presence of a physical conductor separate from the rotor body while the dotted lines indicate a conductive path through the rotor body, either through a conductor embedded or cast within the rotor body or through the rotor body itself, if the rotor body is made of an electrically conductive material. Each dotted or dashed line may represent a single conductor or multiple conductors. The pair of dashed lines between each pair of magnetic poles may be a single conducting path instead of the pair of conducting paths as shown. There may be a number of conductors axially passing through the rotor, which may or may not be connected based on specific constructions, as well as current and voltage ratings.

In the embodiment illustrated in Figure 15A, switching devices **1504A, 1504B, 1504C,** and **1504D,** which are herein collectively referred to as switching devices **1504,** a located at one end of rotor **1500.** Switching devices **1504** are closed on command to form conductive loops that surround each rotor magnetic pole, shown as labels "North" and "South" to indicate the direction of the magnetic pole. Each magnetic pole projects normal to the surface of rotor **1500,** i.e., toward the viewer. The embodiment illustrated in Figure 15A provides a controllably conductive loop around each rotor magnetic pole. Each pole may be created by a single magnet, as shown in Figure 13A, or by multiple magnets, as shown in Figure 14A.

Figure 15B illustrates a hybrid cage according to another embodiment of the subject matter described herein. The embodiment illustrated in Figure 15B may be used with rotors where each pole is made of multiple magnet sections, such as shown in Figure 14B. In this manner each magnet section may be separately protected. This circuit construction may be used with a variety of rotor designs, especially where a rotor magnetic pole is created a magnet assembly constructed of multiple individual magnet segments, which may be individually protected by this cage concept. The choice of number of coils would depend upon voltage and currents induced, which would largely depend upon size of the machine, e.g., via application of faraday's law.

Figure 15C illustrates a hybrid cage according to yet another embodiment of the subject matter described herein. The embodiment illustrated in Figure 15C provides separate cages and circuits for protection of a given portion of magnet or for dynamic sequencing of the cages. In this embodiment, a first cage **1502** is shown as dashed or dotted lines and a second cage **1508** is indicated using lines with a "dash-dot-dash-dot" pattern. First cage **1502** includes a first set of switching devices, only one of which is labeled as switching device **1504.** First cage **1510** includes its own, separate set of switching devices, only one of which is labeled as switching device **1510.** In one embodiment, one cage may provide protection in one direction and another cage may provide protection in another direction. For example, second cage **1508** may provide additional protection along the q-axis.

For all circuit topologies, including those shown in Figures 15A-15C and also including circuit topologies not shown, all circuits may be connected in multiple series and parallel paths, including multiple conductive turns about a single magnet or magnet assembly to attain preferable current and voltage characteristics. These characteristics would be determined by the geometry of the machine, as well as the current, voltage, and other ratings of the devices in which open and close the cage circuits.

It will be understood that various details of the subject matter described herein may be changed without departing from the scope of the subject matter described herein. Furthermore, the foregoing description is for the purpose of illustration only, and not for the purpose of limitation.

## Claims

1. A rotor for an electrical machine, the rotor comprising:
a rotor (400, 500, 600, 1002, 1102, 1202, 1300, 1400, 1500) body having a central axis and including a plurality of permanent magnets (402, 1004, 1302) positioned to create a plurality of rotor magnetic poles distributed around a peripheral surface of the rotor, wherein each permanent magnet (402, 1004, 1302) comprises a magnet body (200, 300) having a center portion (202, 302, 402A) and a peripheral portion (204, 304, 402B), wherein the center portion (202, 302, 402A) comprises a material having higher remanence than the material comprising the peripheral portion (204, 304, 420B) and wherein the peripheral portion (204, 304, 402B) comprises a material having a higher coercivity than the material comprising the center portion (202, 302, 402A); and
wherein the rotor (400, 500, 600, 1002, 1102, 1202, 1300, 1400, 1500) is a conductive cage rotor construction having a cage (404, 504, 604, 1006, 1106, 1206, 1502, 1508) comprising a plurality of closed conductive loops (1052A, 1502B, 1502C, 1502D) electrically connected between each other, the cage being a damping cage, made for the purpose to protect the magnets, each closed conductive loop (1052A, 1502B, 1502C, 1502D) being disposed around a corresponding rotor magnetic pole of the plurality of rotor magnetic poles, the cage being a hybrid cage, wherein the closed conductive loops of the cage are controllable to be a closed circuit or an open circuit.

2. The rotor of claim 1 wherein the peripheral portion (204, 304, 402B) of the magnet body (200, 300) comprises the portion of the magnet body (200, 300) that is normal to the direction of the magnetic pole formed by the magnet body (200, 300).

3. The rotor of claim 1, wherein the conductive loops (1052A, 1502B, 1502C, 1502D) include switching devices (1306, 1404, 1504) controllable to form a closed circuit or an open circuit around each of the rotor magnetic poles.

4. The rotor of claim 3, wherein the switching devices (1306, 1404, 1504) comprise at least one of a silicon controlled rectifier, an insulated gate bipolar junction transistor, a metal oxide semiconductor, a field effect transistor, a mechanical switch, and an electromechanical switch.

5. The rotor of claim 1 comprising a control circuit for controlling the conductive loops (1052A, 1502B, 1502C, 1502D) to form closed circuits or open circuits around the rotor magnetic poles.

6. The rotor of claim 1, wherein at least one of the conductive loops (1052A, 1502B, 1502C, 1502D) circumscribes a permanent magnet (402, 1004, 1302).

7. The rotor of claim 1, wherein at least one of the conductive loops (1052A, 1502B, 1502C, 1502D) circumscribes a magnetic pole created by a plurality of permanent magnets (402, 1004, 1302).

8. The rotor of claim 1, wherein the conductive loops (1052A, 1502B, 1502C, 1502D) are controlled to form a closed circuit around each of the rotor magnetic poles in response to the presence of a magnetic field having a field strength or change in field strength that exceeds a threshold magnitude.

9. The rotor of claim 1, wherein the conductive loops (1052A, 1502B, 1502C, 1502D) are controlled to form an open circuit around each of the rotor magnetic poles in response to the absence of a magnetic field having a field strength or change in field strength that exceeds a threshold magnitude.

10. The rotor of claim 1, wherein the rotor magnetic poles are radially, axially, or transversely oriented relative to the rotor (400, 500, 600, 1002, 1102, 1202, 1300, 1400, 1500).

11. The rotor of claim 1, comprising a thermally insulating material for thermally insulating the conductors of the hybrid cage from the rotor permanent magnets (402, 1004, 1302) to reduce propagation of thermal energy from the cage (404, 504, 604, 1006, 1106, 1206, 1502, 1508) to the magnets (402, 1004, 1302).

12. An electrical machine with a hybrid cage, the machine comprising:
a stator having a central axis and a plurality of windings for generating a rotating field of stator magnetic poles; and
a rotor (1300, 1400, 1500) according to claim 1.

13. The machine of claim 12, wherein the peripheral portion of the magnet body comprises the portion of the magnet body that is normal to the direction of the magnetic pole formed by the magnet body;
or
wherein the peripheral portion of the magnet body comprises every peripheral surface of the magnet body;
or
wherein the material having a higher coercivity than the material comprising the center portion comprises material having a higher concentration by weight of a first substance compared to the material comprising the center portion.

14. A method for operating a permanent magnet electrical machine with a hybrid cage (1502, 1508), the method comprising:
providing, at an electrical machine that includes a rotor (1300, 1400, 1500) having a plurality of permanent magnets positioned to create a plurality of rotor magnetic poles distributed around a peripheral surface of the rotor (1300, 1400, 1500), wherein the rotor (1300, 1400, 1500) is a conductive cage rotor construction having a cage (1502, 1508) comprising a plurality of closed conductive loops (1502A, 1502B, 1502C, 1502D) electrically connected between each other, the cage being a damping cage, made for the purpose to protect the magnets, each closed conductive loop (1502A, 1502B, 1502C, 1502D) being disposed around a corresponding rotor magnetic pole of the plurality of rotor magnetic poles, the cage being a hybrid cage, wherein the closed conductive loops of the cage are controllable to be a closed circuit or an open circuit,
wherein each permanent magnet comprises a magnet body having a center portion and a peripheral portion, wherein the center portion comprises a material having higher remanence than the material comprising the peripheral portion and wherein the peripheral portion comprises a material having a higher coercivity than the material comprising the center portion.

15. The method of claim 14, wherein the conductive loops (1502A, 1502B, 1502C, 1502D) are controllable to form a closed circuit or an open circuit around each of the rotor magnetic poles, the method comprising:
controlling the conductive paths (1304, 1402) to form a closed circuit around each of the rotor magnetic poles in response to the presence of a magnetic field having a field strength that exceeds a threshold magnitude; and
controlling the conductive paths (1304, 1402) to form an open circuit around each of the rotor magnetic poles in response to the absence of a magnetic field having a field strength that exceeds a threshold magnitude.

## Patentansprüche

1. Rotor für eine elektrische Maschine, wobei der Rotor Folgendes umfasst:
einen Rotor(400, 500, 600, 1002, 1102, 1202, 1300, 1400, 1500)körper, der eine Mittelachse aufweist und mehrere Permanentmagneten (402, 1004, 1302) einschließt, die positioniert sind, um mehrere Rotormagnetpole zu erzeugen, die um eine Randoberfläche des Rotors herum verteilt sind, wobei jeder Permanentmagnet (402, 1004, 1302) einen Magnetkörper (200, 300) umfasst, der einen Mittelabschnitt (202, 302, 402A) und einen Randabschnitt (204, 304, 402B) aufweist, wobei der Mittelabschnitt (202, 302, 402A) ein Material umfasst, das eine höhere Remanenz aufweist als das Material, das den Randabschnitt (204, 304, 420B) umfasst, und wobei der Randabschnitt (204, 304, 402B) ein Material umfasst, das eine höhere Koerzitivkraft aufweist als das Material, das den Mittelabschnitt (202, 302, 402A) umfasst; und
wobei der Rotor (400, 500, 600, 1002, 1102, 1202, 1300, 1400, 1500) eine leitfähige Käfigläuferkonstruktion ist, die einen Käfig (404, 504, 604, 1006, 1106, 1206, 1502, 1508) aufweist, der mehrere geschlossene leitfähige Schleifen (1052A, 1502B, 1502C, 1502D) umfasst, die elektrisch miteinander verbunden sind, wobei der Käfig ein Dämpfungskäfig ist, der für den Zweck des Schützens der Magnete hergestellt ist, wobei jede geschlossene leitfähige Schleife (1052A, 1502B, 1502C, 1502D) um einen entsprechenden Rotormagnetpol der mehreren Rotormagnetpole angeordnet ist, wobei der Käfig ein Hybridkäfig ist, wobei die geschlossenen leitfähigen Schleifen des Käfigs steuerbar sind, um ein geschlossener Stromkreis oder ein offener Stromkreis zu sein.

2. Rotor nach Anspruch 1, wobei der Randabschnitt (204, 304, 402B) des Magnetkörpers (200, 300) den Abschnitt des Magnetkörpers (200, 300) umfasst, der senkrecht zu der Richtung des Magnetpols ist, der durch den Magnetkörper (200, 300) ausgebildet ist.

3. Rotor nach Anspruch 1, wobei die leitfähigen Schleifen (1052A, 1502B, 1502C, 1502D) Schaltvorrichtungen (1306, 1404, 1504) einschließen, die steuerbar sind, um einen geschlossenen Stromkreis oder einen offenen Stromkreis um jeden der Rotormagnetpole herum auszubilden.

4. Rotor nach Anspruch 3, wobei die Schaltvorrichtungen (1306, 1404, 1504) einen siliziumgesteuerten Gleichrichter, einen Bipolartransistor mit isoliertem Gate, einen Metalloxidhalbleiter, einen Feldeffekttransistor, einen mechanischen Schalter und/oder einen elektromechanischen Schalter umfassen.

5. Rotor nach Anspruch 1, umfassend einen Steuerstromkreis zum Steuern der leitfähigen Schleifen (1052A, 1502B, 1502C, 1502D), um geschlossene Stromkreise oder offene Stromkreise um die Rotormagnetpole herum auszubilden.

6. Rotor nach Anspruch 1, wobei wenigstens eine der leitfähigen Schleifen (1052A, 1502B, 1502C, 1502D) einen Permanentmagneten (402, 1004, 1302) beschränkt.

7. Rotor nach Anspruch 1, wobei wenigstens eine der leitfähigen Schleifen (1052A, 1502B, 1502C, 1502D) einen Magnetpol beschränkt, der durch mehrere Permanentmagnete (402, 1004, 1302) erzeugt wird.

8. Rotor nach Anspruch 1, wobei die leitfähigen Schleifen (1052A, 1502B, 1502C, 1502D) gesteuert werden, um einen geschlossenen Stromkreis um jeden der Rotormagnetpole herum auszubilden als Reaktion auf die Anwesenheit eines Magnetfelds, das eine Feldstärke oder eine Veränderung der Feldstärke aufweist, die eine Schwellenwertgröße übersteigt.

9. Rotor nach Anspruch 1, wobei die leitfähigen Schleifen (1052A, 1502B, 1502C, 1502D) gesteuert werden, um einen offenen Stromkreis um jeden der Rotormagnetpole herum auszubilden als Reaktion auf die Abwesenheit eines Magnetfelds, das eine Feldstärke oder eine Veränderung der Feldstärke aufweist, die eine Schwellenwertgröße übersteigt.

10. Rotor nach Anspruch 1, wobei die Rotormagnetpole radial, axial oder quer bezüglich des Rotors (400, 500, 600, 1002, 1102, 1202, 1300, 1400, 1500) ausgerichtet sind.

11. Rotor nach Anspruch 1, umfassend ein thermisch isolierendes Material zum thermischen Isolieren der Leiter des Hybridkäfigs von den Rotorpermanentmagneten (402, 1004, 1302), um eine Ausbreitung von thermischer Energie von dem Käfig (404, 504, 604, 1006, 1106, 1206, 1502, 1508) zu den Magneten (402, 1004, 1302) zu verringern.

12. Elektrische Maschine mit einem Hybridkäfig, wobei die Maschine Folgendes umfasst:
einen Stator, der eine Mittelachse und mehrere Wicklungen zum Erzeugen eines Drehfelds von Statormagnetpolen aufweist; und
einen Rotor (1300, 1400, 1500) nach Anspruch 1.

13. Maschine nach Anspruch 12, wobei der Randabschnitt des Magnetkörpers den Abschnitt des Magnetkörpers umfasst, der senkrecht zu der Richtung des durch den Magnetkörper ausgebildeten Magnetpols ist; oder
wobei der Randabschnitt des Magnetkörpers jede Randoberfläche des Magnetkörpers umfasst; oder
wobei das Material, das eine höhere Koerzitivkraft als das Material aufweist, das den Mittelabschnitt umfasst, Material umfasst, das eine höhere Gewichtskonzentration einer ersten Substanz verglichen mit dem Material, das den Mittelabschnitt umfasst, aufweist.

14. Verfahren zum Betreiben einer permanentmagnetischen elektrischen Maschine mit einem Hybridkäfig (1502, 1508), wobei das Verfahren Folgendes umfasst:
Bereitstellen an einer elektrischen Maschine, die einen Rotor (1300, 1400, 1500) einschließt, der mehrere Permanentmagnete aufweist, die positioniert sind, um mehrere Rotormagnetpole zu erzeugen, die um eine Randoberfläche des Rotors (1300, 1400, 1500) herum verteilt sind, wobei der Rotor (1300, 1400, 1500) eine leitfähige Käfigläuferkonstruktion ist, die einen Käfig (1502, 1508) aufweist, der mehrere geschlossene leitfähige Schleifen (1502A, 1502B, 1502C, 1502D) umfasst, die elektrisch miteinander verbunden sind, wobei der Käfig ein Dämpfungskäfig ist, der für den Zweck des Schützens der Magnete hergestellt ist, wobei jede geschlossene leitfähige Schleife (1502A, 1502B, 1502C, 1502D) um einen entsprechenden Rotormagnetpol der mehreren Rotormagnetpole herum angeordnet ist, wobei der Käfig ein Hybridkäfig ist, wobei die geschlossenen leitfähigen Schleifen des Käfigs steuerbar sind, um ein geschlossener Stromkreis oder ein offener Stromkreis zu sein, wobei jeder Permanentmagnet einen Magnetkörper umfasst, der einen Mittelabschnitt und einen Randabschnitt aufweist, wobei der Mittelabschnitt ein Material umfasst, das eine höhere Remanenz aufweist als das Material, das den Randabschnitt umfasst, und wobei der Randabschnitt ein Material umfasst, das eine höhere Koerzitivkraft aufweist als das Material, das den Mittelabschnitt umfasst.

15. Verfahren nach Anspruch 14, wobei die leitfähigen Schleifen (1502A, 1502B, 1502C, 1502D) steuerbar sind, um einen geschlossenen Stromkreis oder einen offenen Stromkreis um jeden der Rotormagnetpole herum auszubilden, wobei das Verfahren Folgendes umfasst:
Steuern der leitfähigen Bahnen (1304, 1402), um einen geschlossenen Stromkreis um jeden der Rotormagnetpole herum auszubilden als Reaktion auf die Anwesenheit eines Magnetfelds, das eine Feldstärke aufweist, die eine Schwellenwertgröße überschreitet; und
Steuern der leitfähigen Bahnen (1304, 1402), um einen offenen Stromkreis um jeden der Rotormagnetpole herum auszubilden als Reaktion auf die Abwesenheit eines Magnetfelds, das eine Feldstärke aufweist, die eine Schwellenwertgröße überschreitet.

## Revendications

1. Rotor pour une machine électrique, le rotor comprenant :
un corps de rotor (400, 500, 600, 1002, 1102, 1202, 1300, 1400, 1500) ayant un axe central et comprenant une pluralité d'aimants permanents (402, 1004, 1302) positionnés pour créer une pluralité de pôles magnétiques de rotor répartis autour d'une surface périphérique du rotor, chaque aimant permanent (402, 1004, 1302) comprenant un corps d'aimant (200, 300) ayant une partie centrale (202, 302, 402A) et une partie périphérique (204, 304, 402B), dans lequel la partie centrale (202, 302, 402A) comprend un matériau ayant une rémanence supérieure à celle du matériau constituant la partie périphérique (204, 304, 420B) et dans laquelle la partie périphérique (204, 304, 402B) comprend un matériau ayant une plus grande coercivité que le matériau constituant la partie centrale (202, 302, 402A) ; et
dans lequel le rotor (400, 500, 600, 1002, 1102, 1202, 1300, 1400, 1500) est une structure de rotor à cage conductrice comportant une cage (404, 504, 604, 1006, 1106, 1206, 1502, 1508) comprenant une pluralité de boucles conductrices fermées (1052A, 1502B, 1502C, 1502D) connectées électriquement entre elles, la cage étant une cage d'amortissement réalisée dans le but de protéger les aimants, chaque boucle conductrice fermée (1052A, 1502B, 1502C, 1502D) étant disposée autour d'un pôle magnétique de rotor correspondant de la pluralité de pôles magnétiques de rotor, la cage étant une cage hybride, les boucles conductrices fermées de la cage pouvant être commandées pour être un circuit fermé ou un circuit ouvert.

2. Rotor selon la revendication 1, dans lequel la partie périphérique (204, 304, 402B) du corps d'aimant (200, 300) comprend la partie du corps d'aimant (200, 300) qui est perpendiculaire à la direction du pôle magnétique formée par le corps magnétique (200, 300).

3. Rotor selon la revendication 1, dans lequel les boucles conductrices (1052A, 1502B, 1502C, 1502D) comprennent des dispositifs de commutation (1306, 1404, 1504) pouvant être commandés pour former un circuit fermé ou un circuit ouvert autour de chacun des pôles magnétiques du rotor.

4. Rotor selon la revendication 3, dans lequel les dispositifs de commutation (1306, 1404, 1504) comprennent au moins l'un d'un redresseur au silicium commandé, un transistor à jonction bipolaire à grille isolée, un semi-conducteur d'oxyde métallique, un transistor à effet de champ, un commutateur mécanique et un interrupteur électromécanique.

5. Rotor selon la revendication 1, comprenant un circuit de commande destiné à commander les boucles conductrices (1052A, 1502B, 1502C, 1502D) pour former des circuits fermés ou des circuits ouverts autour des pôles magnétiques du rotor.

6. Rotor selon la revendication 1, dans lequel au moins l'une des boucles conductrices (1052A, 1502B, 1502C, 1502D) circonscrit un aimant permanent (402, 1004, 1302).

7. Rotor selon la revendication 1, dans lequel au moins l'une des boucles conductrices (1052A, 1502B, 1502C, 1502D) circonscrit un pôle magnétique créé par une pluralité d'aimants permanents (402, 1004, 1302).

8. Rotor selon la revendication 1, dans lequel les boucles conductrices (1052A, 1502B, 1502C, 1502D) sont commandées pour former un circuit fermé autour de chacun des pôles magnétiques du rotor en réponse à la présence d'un champ magnétique ayant une intensité de champ ou un changement d'intensité de champ supérieur à une valeur seuil.

9. Rotor selon la revendication 1, dans lequel les boucles conductrices (1052A, 1502B, 1502C, 1502D) sont commandées pour former un circuit ouvert autour de chacun des pôles magnétiques du rotor en réponse à l'absence d'un champ magnétique ayant une intensité de champ ou un changement d'intensité de champ supérieur à une valeur seuil.

10. Rotor selon la revendication 1, dans lequel les pôles magnétiques du rotor sont radialement, axialement ou transversalement orientés par rapport au rotor (400, 500, 600, 1002, 1102, 1202, 1300, 1400, 1500).

11. Rotor selon la revendication 1, comprenant un matériau thermiquement isolant pour isoler thermiquement les conducteurs de la cage hybride des aimants permanents du rotor (402, 1004, 1302) afin de réduire la propagation de l'énergie thermique depuis la cage (404, 504, 604, 1006, 1106, 1206, 1502, 1508) vers les aimants (402, 1004, 1302).

12. Machine électrique avec une cage hybride, la machine comprenant :
un stator ayant un axe central et une pluralité d'enroulements pour générer un champ tournant de pôles magnétiques de stator ; et
un rotor (1300, 1400, 1500) selon la revendication 1.

13. Machine selon la revendication 12, dans lequel la partie périphérique du corps d'aimant comprend la partie du corps d'aimant qui est perpendiculaire à la direction du pôle magnétique formé par le corps d'aimant ; ou
dans lequel la partie périphérique du corps d'aimant comprend chaque surface périphérique du corps d'aimant ; ou
dans lequel le matériau ayant une plus grande coercivité que le matériau constituant la partie centrale comprend un matériau ayant une concentration en poids supérieure d'une première substance par rapport au matériau constituant la partie centrale.

14. Procédé pour faire fonctionner une machine électrique à aimants permanents avec une cage hybride (1502, 1508), le procédé consistant à :
prévoir, au niveau d'une machine électrique qui comprend un rotor (1300, 1400, 1500) ayant une pluralité d'aimants permanents positionnés de manière à créer une pluralité de pôles magnétiques de rotor répartis autour d'une surface périphérique du rotor (1300, 1400, 1500), dans lequel le rotor (1300, 1400, 1500) est une construction de rotor à cage conductrice comportant une cage (1502, 1508) comprenant une pluralité de boucles conductrices fermées (1502A, 1502B, 1502C, 1502D) connectées électriquement entre elles, la cage étant une cage amortissante, réalisée dans le but de protéger les aimants, chaque boucle conductrice fermée (1502A, 1502B, 1502C, 1502D) étant disposée autour d'un pôle magnétique de rotor correspondant de la pluralité de pôles magnétiques de rotor, la cage étant une cage hybride, dans laquelle les boucles de la cage peuvent être commandées pour être un circuit fermé ou un circuit ouvert, chaque aimant permanent comprenant un corps d'aimant ayant une partie centrale et une partie périphérique, la partie centrale comprenant un matériau ayant une rémanence plus élevée que le matériau constituant la partie périphérique et la partie périphérique comprenant un matériau ayant une coercivité supérieure à celle du matériau constituant la partie centrale.

15. Procédé selon la revendication 14, dans lequel les boucles conductrices (1502A, 1502B, 1502C, 1502D) peuvent être commandées pour former un circuit fermé ou un circuit ouvert autour de chacun des pôles magnétiques du rotor, le procédé consistant à :
commander les chemins conducteurs (1304, 1402) pour former un circuit fermé autour de chacun des pôles magnétiques du rotor en réponse à la présence d'un champ magnétique ayant une intensité de champ supérieure à une valeur seuil ; et
commander les chemins conducteurs (1304, 1402) pour former un circuit ouvert autour de chacun des pôles magnétiques du rotor en réponse à l'absence d'un champ magnétique ayant une intensité de champ supérieure à une valeur seuil.
